# EUROPEAN PATENT APPLICATION

(11) **EP 1 768 054 A1**
(43) Date of publication of application: **28.03.2007**
(21) Application number: 05077071.8
(22) Date of filing: 08.09.2005
(51) Int. Cl.: G06Q 10/00

(54) **Service terminal**

(71) Applicant: David, Leonard, Cecil Hills NSW 2171 (AU)
(72) Inventor: David, Leonard, Cecil Hills NSW 2171 (AU)
(74) Representative: Brooks, Nigel Samuel

(57) **Abstract**

An establishment customer service system includes a central processor disposed in the establishment and one or more service terminals in communication with the central processor, the terminals being disposed in the establishment proximate one or more customer locations of the establishment. Each terminal is configured to display a menu presenting to the customer goods and/or services vendible by the establishment and includes a menu item selector such that actuation of the selector by the customer causes an order signal to be transmitted to the central processor which returns an order confirmation signal. The order signal includes information indicative goods and/or services desired by a customer. The service terminals also include an automated payment device disposed in or adjacent each service terminal, the payment device configured for receiving payment for goods and/or services ordered by the customer and confirmed by the central processor;
wherein the ordered goods and/or services are provided to the customer once payment is made.

## Description

### FIELD OF THE INVENTION

The invention relates to customer service and, in particular, to a customer service system.

The invention has been developed primarily for use in establishments vending food and/or beverages and will be described hereinafter with reference to this application. However, it will be appreciated that the invention is not limited to this field of use.

### BACKGROUND OF THE INVENTION

In conventional establishments that vend food for consumption on the premises a customer must either queue up at one or more central points in the establishment to deliver their order. The customer pays for the order at the end of the ordering process or at some other time. Alternatively, the customer is seated and must wait for a waiter to come and collect their order. This is similarly the case for establishments that vend beverages, however, it is more common in these cases that the customers need to queue at one or more central beverage dispensing points or counters to order and receive their goods.

As a significant number of people will attest, food and beverage vending establishments occasionally get very busy where they are unable to service all their customers within a desired period of time. This also introduces the situation where some customers will jump ahead of other in a queue to save themselves time which results in the food or beverage vendors not being able to serve the customers on any preferred basis such as first-come, first-served. This situation not only leads to unsatisfied customers through at least a perceived lack of service, but translates into a loss of business not only from dissatisfied customers but also due to the inability to service customer orders or even receive the orders.

Notwithstanding the difficulty in servicing customers during such busy situations, the food or beverage vendors themselves may also face difficulties through lack of stock to be vended to the customers or lack of staff available to actually receive orders and/or payment and serve the customers. This can arise when the establishment experiences an unplanned or otherwise random busy period.

In cases where an establishment is franchised or has a relationship with a regionally nearby establishment vending same or similar products and/or services, it is often too late for one vendor to telephone another to transfer stock or staff in response to busy periods. as such, it is often the case that full or desired customer services levels cannot be provided.

It is also noted that in the case of food vending establishments, for example at bistros or the like, that a meal board is displayed to provide customers with an indication of any specials or unusual items that can be ordered by the customer. These are typically disposed adjacent a central ordering area or counter where customers need to queue to order, or adjacent an entrance area of the establishment. Unfortunately, not all customers see these boards reducing their effectiveness.

### OBJECT OF THE INVENTION

It is an object of the present invention to provide a customer service system that will overcome or substantially ameliorate one or more of the deficiencies of the prior art, or to provide a useful alternative.

### SUMMARY OF THE INVENTION

According to a first aspect of the invention there is provided an establishment customer service system including:
a central processor disposed in the establishment;
one or more service terminals in communication with the central processor and disposed in the establishment proximate one or more customer locations of the establishment wherein each terminal is configured to display a menu presenting to the customer goods and/or services vendible by the establishment, each terminal including a menu item selector such that actuation of the selector by the customer causes an order signal to be transmitted to the central processor which returns an order confirmation signal, the order signal including information indicative goods and/or services desired by a customer; and
an automated payment device disposed in or adjacent each service terminal, the payment device configured for receiving payment for goods and/or services ordered by the customer and confirmed by the central processor;
wherein the ordered goods and/or services are provided to the customer once payment is made.

Preferably, each service terminal is mains powered and is in radio frequency communication with the central processor over a virtual private network. More preferably, each terminal includes three display screens and the menu item selector is an input device.

In preferred embodiments, the menu on each terminal can be customised by a customer to display selected predetermined types of goods and/or services. More preferably, the system monitors the goods and/or services provided to customers and manages establishment stock control.

Preferably, the automated payment device includes an EFTPOS terminal. In other preferred embodiments, each terminal is configured to provide customer gaming services and/or display advertising.

In preferred embodiments, the central processor is in communication with a franchise processor configured for controlling one or more central processors.

According to another aspect of the invention there is provided a method of providing a customer services system in an establishment, the method including the steps of:
providing a central processor in the establishment;
disposing one or more service terminals in the establishment proximate one or more customer locations, each terminal in communication with the central processor;
configuring each terminal to display a menu presenting to the customers goods and/or services vendible by the establishment;
providing a menu selector allowing a customer to orders selected goods and/or services;
providing an order signal from the service terminal to the central processor including information indicative of the goods and/or services desired by the customer;
providing an order confirmation signal from the central processor to the service terminal;
providing an automated payment device on each service terminal for allowing a customer to pay for goods and/or services ordered through the terminal; and
providing the customer with the ordered goods and/or services.

In preferred embodiments, the method includes the step of allowing the customer to customise the menu to display predetermined types of goods and/or services. More preferably, the method includes the step of the central processor monitoring the goods and/or services provided by the establishment to customers and manages the establishment stock control in response.

Preferably, the method includes the step of selectively displaying gaming services on each service terminal for use by a customer. Similarly preferably, the method includes the step of displaying advertising on each service terminal.

### BRIEF DESCRIPTION OF THE DRAWINGS

Preferred embodiments of the invention will now be described, by way of example only, with reference to the accompanying drawings in which:
FIG. 1 is a block diagram of an establishment customer service system according to a preferred embodiment; and
FIG. 2 is a block diagram of an establishment customer service system according to another preferred embodiment.

### DETAILED DESCRIPTION OF THE INVENTION

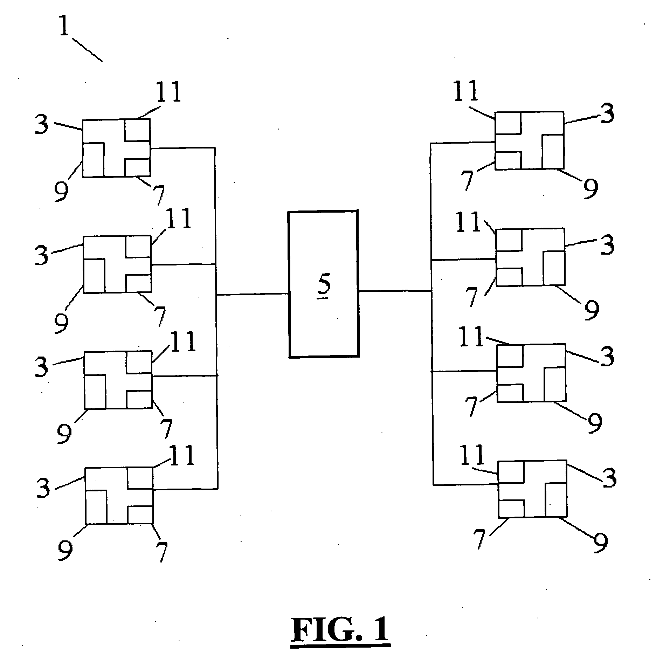

Referring to FIG. 1, there is shown a block diagram representation of an establishment customer service system 1. The service system 1 is located in a restaurant (not illustrated), however, it will be appreciated that the service system 1 can be located in a bar or hotel, or other service establishment.

In the restaurant, customers are located at tables or counters having seating locations. Each table or predetermined number of seating locations, three sequential counter seats in the embodiment of FIG. 1 although not illustrated, includes a service terminal 3. Each service terminal 3 is in communication with a central processor 5 in the form of a computer server. Each service terminal is mains powered, however, any preferred power source such a batteries can be used.

The central processor 5 is disposed in the establishment and communicates with each service terminal 3 via an RF communication link operating a virtual private network. However, it will be appreciated that a cable, optical or other communication link can be used between each service terminal 3 and the central processor 5 and any preferred operating platform such as SMS can be used.

Each terminal 3 is configured to display a menu 7 of goods and/or services vendible by the establishment to the customer. Each terminal 3 includes a menu selector 9 for use by the customer to order goods and/or services from the establishment. It is noted that the customer (not illustrated) can be singular or a group of customers.

In use, the customer orders desired goods and/or services by selecting those items from the menu 7 with menu selector 9. The customer selection of menu items causes an order signal to be sent from the service terminal 3 to the central processor 5. The order signal includes information indicative of the goods and/or services desired by the customer.

The central processor 5 checks the order signal to ensure that the establishment can deliver the goods and/or services of customer order and, if so, the central processor 5 sends an order confirmation signal to the service terminal 3 from which the order signal was sent confirming the order.

Each service terminal 3 further includes an automated payment device 11. The device 11 includes a credit or debit card reader in communication with an EFTPOS network via central processor 5. It is noted that the automated payment device 11 can include other devices such a note and coin handling mechanisms and/or mobile telephone SIMM card or other smart card readers.

In use, once the order confirmation signal is received by the service terminal 3 the customer is prompted to make payment for the ordered goods and/or services via the automated payment device 11. It will be appreciated that in other embodiments of the invention (not illustrated) the payment step can be effected by the customer when the order signal is sent to the central processor 5.

Staff of the establishment are advised of the receipt of a customer order via central processor 5 which prompts the staff to prepare and provide the ordered goods and/or services to the customer. This can occur by staff bringing the order directly to the customer or by prompting the customer to retrieve the order from a counter.

In this way, a customer does not need to leave their seat or designated area to order their goods and/or services. Furthermore, the establishment can attend to each customer order sequentially or by other preferred method. In the event that goods and/or services are temporarily unavailable to the customer, the menu 7 will either remove the items from the menu or a message advising the customer of such is displayed.

The customer service system 1 is configured to monitor all goods and/or services vended to customers or otherwise disposed of and can generate staff prompts to order more goods and/or services; or orders them directly, once they reach a predetermined minimum level. That is, the customer service system 1 manages the establishment stock control either via central processor 3 or via reports to establishment staff.

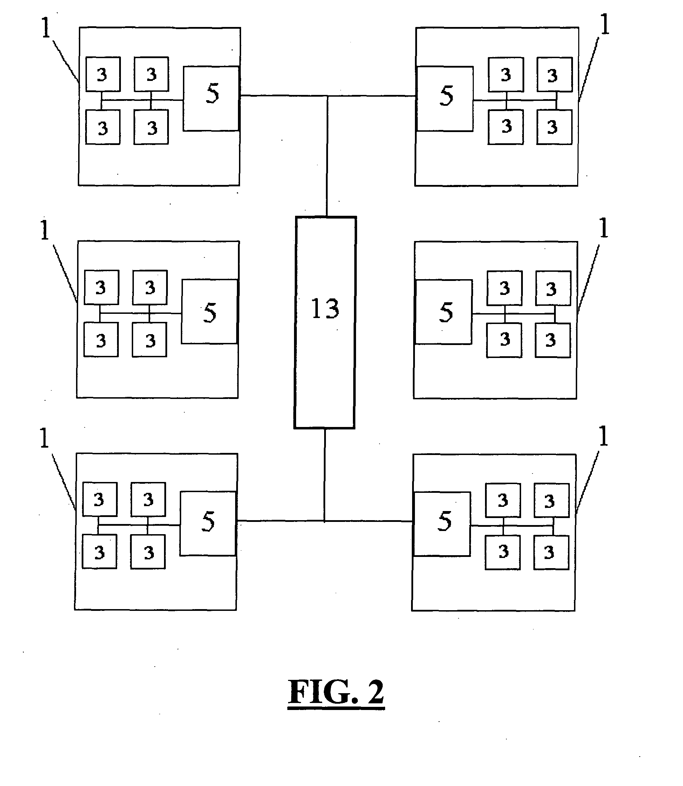

Turning now to FIG. 2, the customer services system 1 of FIG. 1 is shown when applied across a franchise of restaurant establishments. The system 1 is disposed in each franchise and each of the central processors 5 are in communication with a franchise processor 13. The franchise processor 13 is configured to monitor the central processor 5 of each service system 1 and control goods and/or services ordering for each establishment in the franchise.

It can be seen that all displayed menus in each service terminal 3 can be controlled, set and updated from the franchise processor 13 via central processors 5. Similarly, the franchise 13 or central 5 processors can be used to control goods and/or services vended by each establishment or to monitor busy periods and be used to resource each establishment sufficiently with goods and/or services or staff to meet customer demand.

In the case of the system 1 in either FIG. 1 or 2, each service terminal 3 is configured to display advertising or other information determined by the establishment or franchise. The establishment can therefore promote other of their goods and/or services, or those of another party. Similarly, each service terminal 3 in an establishment or between establishments can be interlinked to provide electronic gaming facilities through each terminal 3. The gaming facilities can then provide winnings pooled across all service terminals 3 or provide computer games that can be played between customers located at different service terminals.

Although not illustrated, the services terminal 3 shown in FIGS. 1 and 2 include three displays in the form of video screens wherein only one screen can be used in combination with the menu selector to order goods and/or services. This way, two or more of the same orders cannot be made by a single group simultaneously and the two screens not displaying menus for customer selection can either show the selections being made on the one screen or show some other preferred display.

Also not illustrated, the screens can be touch screens, stylus responsive screens or other interactive display device. Similarly, the screens can be customised by a customer to display, for example, only goods and/or services vended by the establishment of a particular categorisation such as desserts, vegetarian dishes or alcoholic or non-beverages. In the embodiment of FIG. 2, it is noted that each establishment in a franchise is still able to set the menu displays, however, the menu displays including customer prices can be determined at a franchise level and communicated to each customer service system 1 in each establishment to standardise these elements.

In other embodiments (not illustrated) the customers can view the progress of their order on the basis of the central processor 5 updating a relevant service terminal 3. Similarly, the customers can view their order and payment details, or even select that the order be delivered to or picked up from a customer preferred location in the establishment.

It will be appreciated that the customer service system of FIGS. 1 or 2 can be installed and used in establishments where personal customer service is required, for example, a hotel. In such an embodiment (not illustrated), a service terminal 3 can be disposed in each hotel room, as well as in an in-house hotel restaurant and/or bar, each terminal having only a single display and being configured to allow a room occupant to order food and/or beverages from the terminal 3 in their room and pay for the order via an automated payment device 11 or directly to a hotel room account.

In these embodiments, the terminal 3 in each hotel room can also be used to display tourist information, hotel or third party advertising, or interface to a gaming system to allow game play from the room. This embodiment can be used in casinos with the central processor 5 being in communication with one or more casino electronic gaming systems.

The foregoing describes only a preferred embodiment of the present invention and modifications, obvious to those skilled in the art, can be made thereto without departing from the scope of the present invention.

## Claims

1. An establishment customer service system including:
a central processor disposed in the establishment;
one or more service terminals in communication with the central processor and disposed in the establishment proximate one or more customer locations of the establishment wherein each terminal is configured to display a menu presenting to the customer goods and/or services vendible by the establishment, each terminal including a menu item selector such that actuation of the selector by the customer causes an order signal to be transmitted to the central processor which returns an order confirmation signal, the order signal including information indicative goods and/or services desired by a customer; and
an automated payment device disposed in or adjacent each service terminal, the payment device configured for receiving payment for goods and/or services ordered by the customer and confirmed by the central processor;
wherein the ordered goods and/or services are provided to the customer once payment is made.

2. A service system according to claim 1 wherein each service terminal is mains powered and is in radio frequency communication with the central processor over a virtual private network.

3. A service system according to claim 1 wherein each terminal includes three display screens and the menu item selector is an input device.

4. A service system according to claim 1 wherein the menu on each terminal can be customised by a customer to display selected predetermined types of goods and/or services.

5. A service system according to claim 1 wherein the system monitors the goods and/or services provided to customers and manages establishment stock control.

6. A service system according to claim 1 wherein the automated payment device includes an EFTPOS terminal.

7. A service system according to claim 1 wherein each terminal is configured to provide customer gaming services and/or display advertising.

8. A service system according to claim 1 wherein the central processor is in communication with a franchise processor configured for controlling one or more central processors.

9. A method of providing a customer services system in an establishment, the method including the steps of:
providing a central processor in the establishment;
disposing one or more service terminals in the establishment proximate one or more customer locations, each terminal in communication with the central processor;
configuring each terminal to display a menu presenting to the customers goods and/or services vendible by the establishment;
providing a menu selector allowing a customer to orders selected goods and/or services;
providing an order signal from the service terminal to the central processor including information indicative of the goods and/or services desired by the customer;
providing an order confirmation signal from the central processor to the service terminal;
providing an automated payment device on each service terminal for allowing a customer to pay for goods and/or services ordered through the terminal; and
providing the customer with the ordered goods and/or services.

10. A method according to claim 9 including the step of allowing the customer to customise the menu to display predetermined types of goods and/or services.

11. A method according to claim 9 including the step of the central processor monitoring the goods and/or services provided by the establishment to customers and manages the establishment stock control in response.

12. A method according to claim 9 including the step of selectively displaying gaming services on each service terminal for use by a customer.

13. A method according to claim 9 including the step of displaying advertising on each service terminal.
